(19) Europäisches Patentamt / European Patent Office / Office européen des brevets

(11) **EP 3 052 972 B1**

(12) **EUROPEAN PATENT SPECIFICATION**

(45) Date of publication and mention
of the grant of the patent:
**28.04.2021 Bulletin 2021/17**

(21) Application number: **14821842.3**

(22) Date of filing: **03.10.2014**

(51) Int Cl.:
*G01V 15/00* (2006.01)   *G01V 3/10* (2006.01)
*G01V 3/15* (2006.01)   *G01V 13/00* (2006.01)

(86) International application number:
**PCT/IB2014/002871**

(87) International publication number:
**WO 2015/049591 (09.04.2015 Gazette 2015/14)**

(54) **VALIDATING OPERATION OF AN ELECTRONIC MARKER LOCATOR**

VALIDIERUNG DES BETRIEBS EINES ELEKTRONISCHEN MARKIERERS

CONFIRMATION DU FONCTIONNEMENT D'UN DÉTECTEUR DE BALISE ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.10.2013 US 201314046586
04.10.2013 GB 201317633**

(43) Date of publication of application:
**10.08.2016 Bulletin 2016/32**

(73) Proprietor: **RADIODETECTION LIMITED
Avon, Bristol BS14 0AF (GB)**

(72) Inventors:
• **LONGLEY, Timothy
Knowle
Bristol BS4 2EU (GB)**
• **PEARSON, Richard David
Avon
Bristol BS8 4RB (GB)**

(74) Representative: **EIP
Fairfax House
15 Fulwood Place
London WC1V 6HU (GB)**

(56) References cited:
EP-A2- 2 680 044    US-A- 3 686 564
US-A- 5 644 236    US-A1- 2005 030 037
US-A1- 2007 296 415    US-A1- 2010 001 712
US-A1- 2010 060 285    US-B1- 7 336 078

**Description**

FIELD OF THE INVENTION

Embodiments of the present invention relate to locators for locating buried electronic markers. In particular, embodiments of the present invention relate to the validation of the operation of locators for locating electronic markers.

BACKGROUND

Buried electronic markers are used to indicate the location of a buried structure or utility. A buried marker is made from a circular coil that is arranged in a resonant circuit and designed to resonate at a specific frequency. An oscillatory electric current may be induced in this circuit by an externally applied pulse or pulses of magnetic flux linking the coil. The oscillatory current in the coil gives rise to an oscillatory magnetic field around the coil. The presence of this oscillatory magnetic field may be detected, allowing the position of the marker to be determined. The axis of the coil in the buried electronic marker is arranged to be oriented vertically so that the location of the buried marker may be found directly beneath the position where the magnitude of the oscillatory magnetic field is detected to be at a maximum. The depth of the electronic marker may be estimated by detecting the signals transmitted from the marker.

Document US 7,336,078 B1 discloses a portable locator using a multi-sensor mapping omnidirectional sonde for finding and mapping buried objects such as utilities.

SUMMARY OF THE INVENTION

According to a first aspect of the present invention a locator for locating a buried electromagnetic marker as defined in independent claim 1 has a validation mode in which the operation of a transmission antenna of the locator can be validated against calibration data. The locator comprises: a transmission antenna for generating a first oscillatory magnetic field to couple with an electromagnetic marker; and a first reception antenna for receiving an oscillatory magnetic field emitted by the electromagnetic marker. In order to validate the operation of the transmission antenna, the transmission antenna is configured to generate a test oscillatory magnetic field, and the first reception antenna is configured to receive the test oscillatory magnetic field and thereby generate a first detected test signal. The locator further comprises a first analogue to digital converter configured to generate a first digitised test signal from the first detected test signal, the first digitised test signal is indicative of the test oscillatory magnetic field received by the first reception antenna.

In an embodiment the locator further comprises a memory storing calibration data; and a processor configured to calculate a validation value from the first digitised test signal and determine if the validation value is within predetermined limits of the calibration data. In this embodiment the validation of the locator is carried out on the locator itself.

In an embodiment the locator further comprises a second reception antenna for receiving an oscillatory magnetic field emitted by the electromagnetic marker, the second reception antenna being configured to receive the test oscillatory magnetic field and thereby generate a second detected test signal, and a second analogue to digital converter configured to generate a second digitised test signal from the second detected test signal, the second digitised test signal being indicative of the test oscillatory magnetic field received by the second reception antenna. In this embodiment the signals detected by both of the reception antenna may be used in the validation process.

In an embodiment the locator further comprises: a memory storing calibration data; and a processor configured to calculate a validation value from the first digitised test signal and the second digitised test signal and determine if the validation value is within predetermined limits of the calibration data.

In an embodiment the first oscillatory magnetic field comprises a plurality of pulses having a first pulse width, and the test oscillatory magnetic field comprises a plurality of pulses having a second pulse width, the second pulse width being shorter than the first pulse width.

In an embodiment the first oscillatory magnetic field comprises a plurality of pulses having a first amplitude, and the test oscillatory magnetic field comprises a plurality of pulses having a second amplitude, the second amplitude being smaller than the first amplitude.

In embodiments, the power of the test oscillatory magnetic field is reduced compared to the power of the first oscillatory magnetic field. This avoids the reception antenna becoming saturated by the test oscillatory magnetic field.

In an embodiment the locator further comprises an interface configured to transfer the first digitised test signal to a coupled computing device. In this embodiment the validation is carried out on the coupled computing device.

According to a second aspect of the present invention a method of validating the operation of a locator for locating a buried electromagnetic marker as defined in independent claim 8 comprises: controlling a transmission antenna of the locator to generate a test oscillatory magnetic field; controlling a reception antenna of the locator to receive the test oscillatory magnetic field and thereby generate a first detected test signal; calculating a validation value from the first detected test signal; and determining if the validation value is within predetermined limits of calibration data.

In an embodiment the method further comprises generating a certificate if the validation value is within the predetermined limits of the calibration data.

In an embodiment the method further comprises determining an identifier of locator and retrieving the calibration data from a remote database using the identifier of the locator.

In an embodiment the transmission antenna of the locator is configured to generate a first oscillatory magnetic field to couple with an electromagnetic marker and the test oscillatory magnetic field comprises a plurality of pulses having a second pulse width, the second pulse width being shorter than a first pulse width.

In an embodiment the transmission antenna of the locator is configured to generate a first oscillatory magnetic field to couple with an electromagnetic marker and the test oscillatory magnetic field comprises a plurality of pulses having a second amplitude, the second amplitude being smaller than the first amplitude.

In an embodiment the method further comprises disabling the locator if the validation value is not within the predetermined limits of the calibration data.

According to a third aspect of the present invention a computer readable carrier medium carrying computer readable instructions as defined in independent claim 14 is provided.

BRIEF DESCRIPTION OF THE DRAWINGS

In the following, embodiments of the invention will be described by way of example with reference to the accompanying drawings in which

Figure 1 shows an electronic marker locator according to an embodiment of the present invention;

Figure 2 shows an electronic marker locator according to an embodiment of the present invention;

Figure 3 shows method carried out on an electronic marker locator to determine the depth of a buried electronic marker in a marker locate mode;

Figures 4a to 4c show the timing of signals transmitted and received by an electronic marker locator in a marker locate mode;

Figure 5 shows a method of validating the operation of an electronic marker locator according to an embodiment of the present invention;

Figure 6 shows the control of a transmission antenna in an electronic marker locator in an embodiment of the present invention;

Figures 7a to 7c show the test signals transmitted and received in embodiments of the present invention;

Figure 8 shows a locator according to an embodiment of the present invention in which a validation method is carried out when the locator is coupled to a computing device;

Figure 9 shows a system for validating the operation of the locator shown in Figure 8;

Figure 10 shows a method carried out on a computing device in the system shows in Figure 9; and

Figures 11a and 11b show a locator according to an embodiment with a foldable transmission antenna.

DETAILED DESCRIPTION

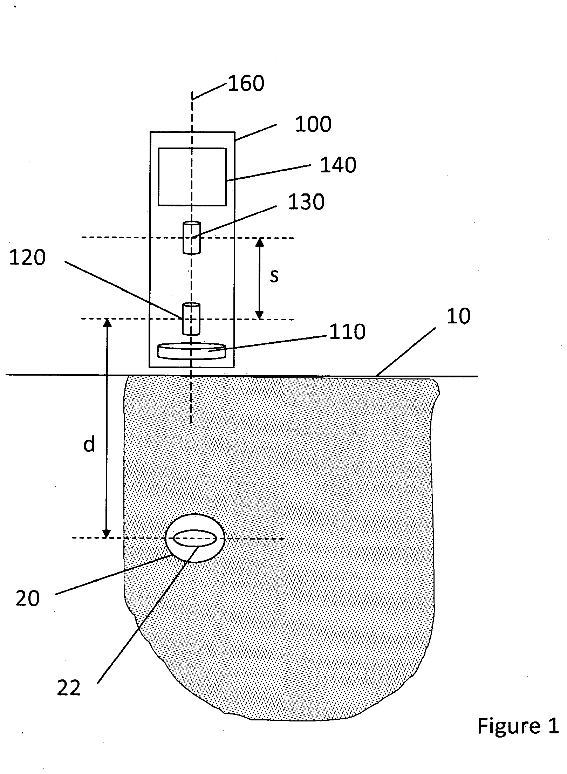

Figure 1 shows an electronic marker locator 100. An electronic marker 20 is buried below ground level 10. The electronic marker 20 comprises a resonant circuit formed from a coil 22 and a capacitor. The electronic marker 20 has a resonant frequency, the value of which is dependent on the capacitance of the capacitor and the inductance of the coil 22.

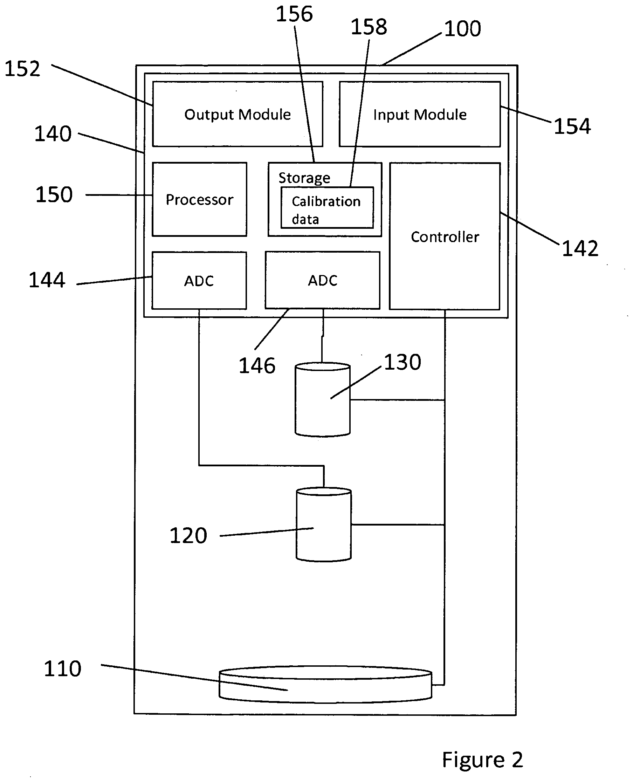

The locator 100 comprises a transmission antenna 110, a first reception antenna 120 and a second reception antenna 130. The locator 100 has control and processing module 140 which controls the antennas and processes the signals received from the antennas. The control and processing module 140 is described in more detail with reference to Figure 2 below.

The locator 100 has a major axis 160. The transmission antenna 110, the first reception antenna 120 and the second reception antenna 130 are arranged such that their magnetic axes are parallel to the major axis 160. As shown in Figure 1, the locator is used with the major axis 160 perpendicular to the ground plane 10.

The second reception antenna 130 is separated from the first reception antenna 120 by a distance s along the major axis 160.

In use, the transmission antenna 110 transmits energy to the electronic marker 20 as an oscillating magnetic field. The frequency of the oscillating magnetic field is selected to match the resonant frequency of the resonant circuit in the electronic marker 20. After the transmission antenna 110 stops transmitting, the first reception antenna 120 and the second reception antenna 130 detect signals received from the electronic marker 20. From the ratio R of the signal strengths and the known value s of the separation of the first reception antenna 120 and the second antenna 130 the depth d of the electronic marker 20 is calculated according to the following formula:

$$d = \frac{s}{\left( R^{1/3} - 1 \right)}$$

The derivation of the above formula is described in United Kingdom Patent Application number 1308550.1.

The depth at which a marker can be located depends on the strength of the transmitted signal. If the transmission antenna does not function within the factory calibration then the depth at which markers can be located may be reduced.

Embodiments of the present invention provide methods of performing a validation test on a locator to check that the transmission antenna is operating within predetermined limits of factory calibration data.

Figure 2 shows the control and processing module 140 of the electronic marker locator 100 in more detail. The control and processing module 140 comprises a controller 142, a first analogue to digital converter (ADC) 144, a second analogue to digital converter 146, a processor 150, an output module 152, an input module 154, and storage 156.

The controller 142 is coupled to the transmit antenna 110, the first reception antenna 120 and the second reception antenna 130. The controller 142 is configured to control the transmit antenna 110, the first reception antenna 120 and the second reception antenna 130. The controller 142 controls the antennas to operate in one of two modes: a marker locate mode and a validation mode.

In the marker locate mode, the controller 142 controls the transmit antenna 110 to transmit signals to a buried marker.

In the validation mode, the controller 142 controls the transmit antenna 110 to transmit signals directly to the first reception antenna 120 and the second reception antenna 130 in order to validate that the transmit antenna 110 is operating within predetermined limits of factory calibration data.

The storage 156 stores calibration data 158. The calibration data 158 is generated in the factory when the locator is calibrated.

In a marker locate mode, the controller 142 is configured to cause the transmit antenna 110 to transmit an oscillating signal to the electronic marker. When the locator is in the marker locate mode, the controller 142 is also configured to switch the first reception antenna 120 and the second reception antenna 130 to a mode in which they do not produce an output signal in response to a magnetic field. The reception antennas are switched to this mode when the transmission antenna 110 is transmitting to the electronic marker so that the reception antennas do not directly detect the signal transmitted by the transmission antenna 110.

US Patent 6617856 describes electronic marker locator system and method with one receive antenna. The processing associated with the signals from each of the reception antennas in the electronic marker locator 100 shown in Figure 2 may be implemented as described in US Patent 6617856.

In the marker locate mode, the controller 142 may be configured to cause the transmission antenna 110 to transmit a sequence of pulses. While the transmission antenna 110 transmits the sequence of pulses, the reception antennas are switched to a mode in which they do not detect the pulses transmitted by the transmission antenna 110. After the sequence of pulses has been transmitted by the transmission antenna, the controller 142 switches the first reception antenna 120 and the second reception antenna 130 into a mode in which they are sensitive to magnetic signals transmitted from the electronic marker.

The first reception antenna 120 is connected to the first ADC 144. The first reception antenna 120 is configured to produce a first analogue signal in response to an oscillating magnetic field. The first ADC 144 is configured to digitise the first analogue signal and produce a first digital signal.

The second reception antenna 130 is connected to the second ADC 146. The second reception antenna 120 is configured to produce a second analogue signal in response to an oscillating magnetic field. The second ADC 146 is configured to digitise the second analogue signal and produce a second digital signal.

The processor 150 is configured to receive the first and second digital signals and to calculate an estimate of the depth of the electronic marker using the ratio of the magnitudes of the magnetic field detected by the first reception antenna 120 and the second reception antenna 130.

The output module 152 is coupled to a display which provides an indication of the calculated depth as a numeric value.

The input module 154 allows a user to input a selection of the type of marker to be located. The table below shows the resonant frequencies for markers associated with different types of utility.

| Application | Colour | Frequency |
|-------------|--------------|------------|
| Power | Red | 169.8 kHz |
| Water | Blue | 145.7k Hz |
| Sanitary | Green | 122.5 kHz |
| Telephone | Orange | 101.4 kHz |
| Gas | Yellow | 83.0 kHz |
| Cable TV | Orange/Black | 77.0 kHz |

The input module 154 is configured to allow a user to select the frequency of the electronic markers being located.

In an embodiment, the processor and the controller are implemented as a single module.

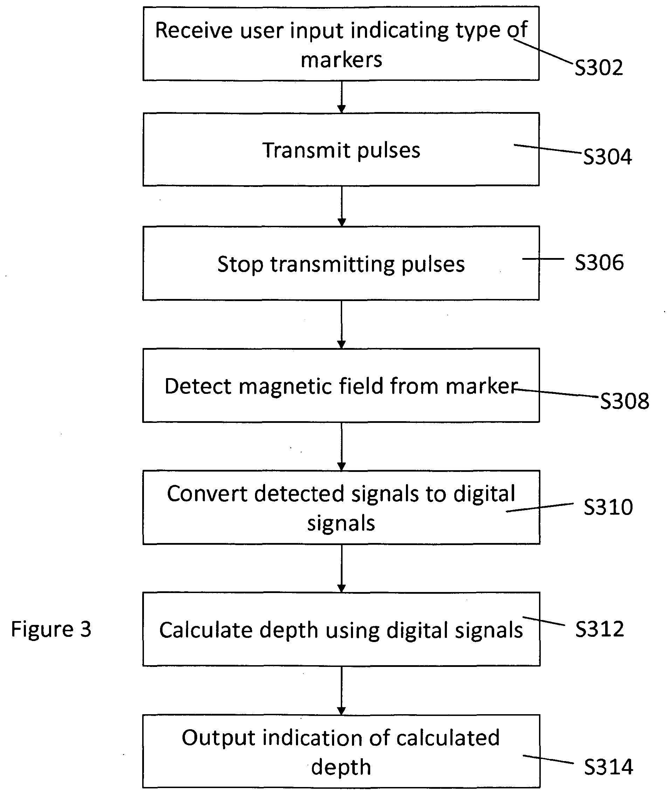

Figure 3 is a flowchart showing a method carried out by a locator in a marker locate mode.

In step S302 a user input indicating the type of electronic markers to be located is received. In step S304, the controller causes the transmission antenna to transmit a pulse or a series of pulses having a frequency corresponding to the selected type of electronic markers. While the transmission antenna is transmitting, the reception antennas are switched to a mode in which they to do not output a signal. During step S304, if there is an electronic marker of the selected type below the locator, an oscillatory current at the resonant frequency of the marker will be induced in the marker.

In step S306, the controller causes the transmission antenna to stop transmitting. In step S308 the reception antennas are switched by the controller into a mode in which they can detect magnetic fields. The oscillatory current in the electronic marker decays and the electronic marker produces an oscillating magnetic field at its resonant frequency. The reception antennas detect the magnetic field produced by the electronic marker.

In step S310 the ADCs convert the analogue signals produced by the reception antennas into digital signals.

In step S312 the processor calculates the depth of the electronic marker from the ratio of the field strength detected by the first receive antenna and the field strength detected by the second receive antenna.

In step S314 the output module outputs an indication of the calculated depth.

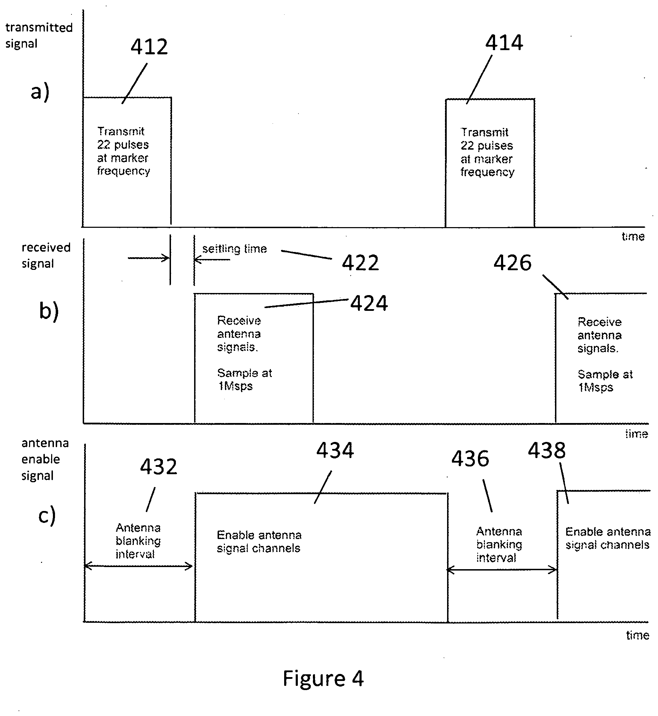

Figures 4a to 4c show the timing of the signals transmitted and received by the transmission antenna and the first and second receive antennas in the marker locate mode.

Figure 4a shows the signals output by the transmission antenna. The controller controls the transmission antenna to transmit a first series 412 of pulses at the selected marker frequency. The first series 412 of pulses includes 22 pulses.

Figure 4b shows the signals received by the first and second reception antennas. A settling time 422 is allowed to elapse before the first and second antennas are switched into a receive mode by the controller. Once the settling time 422 has elapsed, the first and second antennas receive antenna signals 424. The received signals are sampled at 1 Msps by the first and second ADCs.

The sampling rate of the ADC may be varied. The sampling rate of the ADC must be sufficient to meet the Nyquist sampling criterion but there is no upper limit other than the sample rate capability of the ADC and the processing capability and power consumption of the DSP versus the system power budget.

Figure 4c shows the timing of the control of the reception antennas by the controller. The controller switches the antennas into a mode where signals are not detected for a first antenna blanking interval 432. The first antenna blanking interval comprises the time that the transmit antenna is transmitting the first series of pulses 412 and the settling time 422. Once the settling time has elapsed, the reception antenna channels are enabled for a first reception time period 434.

As can be seen from Figure 4c, the first reception time period 434 extends beyond the time that the first and second antennas receive signals 424. During the additional time, the processing of the received signals may take place, and/or signals emitted from buried conductors may be detected and processed as discussed below.

At the end of the first reception time period 434, the next cycle begins. The controller causes the transmission antenna to transmit a second series of pulses 414. Then after a settling time has elapsed, the reception antennas receive the signals 426 transmitted by the electronic marker. The controller switches the reception antennas into a blanked mode during a second antenna blanking interval 436 while the transmission antenna is transmitting and during the settling period. Following the second antenna blanking interval 436, the receive antennas are enabled for a second reception time period 438.

The repetition rate of the transmit bursts is a parameter that is a trade-off between power consumption from the battery and the signal-to-noise ratio of the detected signal. Given the need to provide "real-time" operation to enable the user to sweep the Locator over an area of interest in search of buried markers, the optimum burst rate is typically between 100 and 1000 per second.

In the embodiment described above in relation to Figures 4a - c, the first and second series of pulses each include 22 pulses. The number of pulses in the series may be varied. The preferred range of numbers of pulses is related to the exponential time constant of the build-up of signal current in the marker in response to an applied magnetic field that is alternating at the resonant frequency of the marker. Too few pulses results in a weak return signal from the marker. Beyond a certain number of pulses there is little additional signal to be gained by adding more pulses. Adding more pulses is wasteful of battery power. The optimum number of pulses usually lies in the range from approximately 16 to 36 pulses.

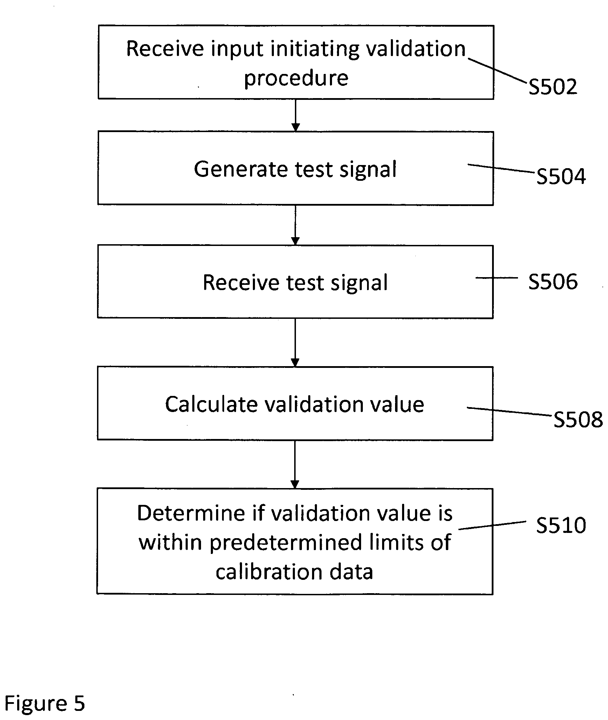

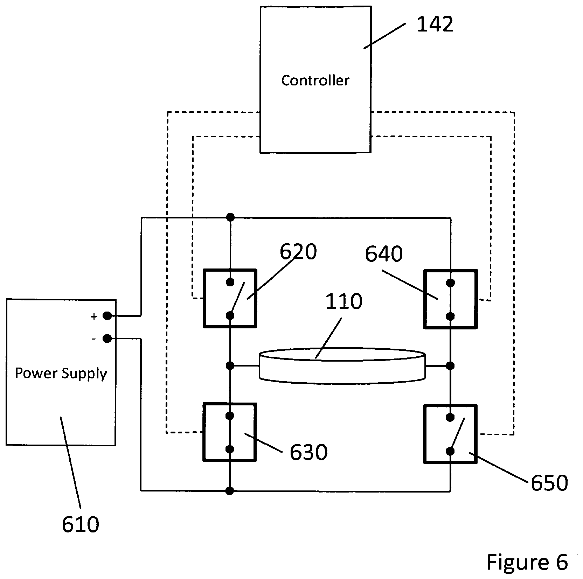

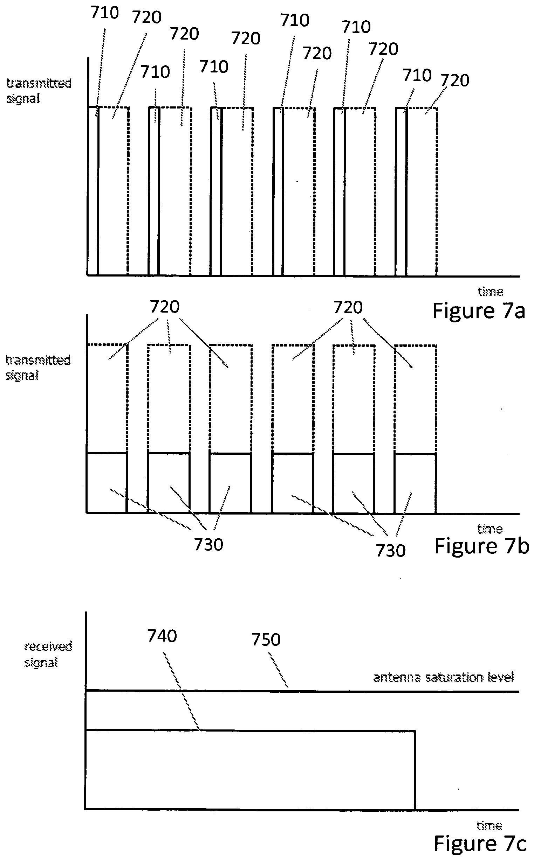

Figure 5 shows a method carried out by the marker in a validation mode. In step S502, an input is received initiating the validation procedure. In step S504, the transmission antenna generates a test signal. The test signal is an oscillatory magnetic field. In step S506, the test signal is received by the reception antennas. Here it is noted that in the validation mode, the test signal is received directly by the reception antennas from the transmission antenna. This means that the antenna blanking described above in relation to Figure 4c is not required in the validation mode. In embodiments, the power of the test signal transmitted by the transmission antenna may be reduced to avoid saturation of the reception antennas. This is described in more detail with reference to Figures 6 and 7 below.

In step S508 the processor calculates a validation value from the strengths of the detected signals. In step S510 the processor determines whether the validation value is within predetermined limits of the calibration data 158 stored in the storage 156.

The results of the validation test are conveyed to the user via the output module 152. If the locator fails the validation test a warning may be displayed to the user. Alternatively, or additionally, the locator may be locked to prevent its use until the locator is recalibrated and the validation test is passed.

Figure 6 shows the control of the transmission antenna in an embodiment. A power supply 610 has a positive terminal (+) and a negative terminal (-). Four switches 620 630 640 and 650 in an H-bridge formation connect the power supply 610 to the transmission antenna 110. The controller controls the switches so that two switches are open and two are closed so that a current flows through the transmission antenna in one direction. As shown in figure 6, a first switch 620 is open and a second switch 630 is closed so the one connection to the transmission antenna 110 is connected to the negative terminal of the power supply 610. A third switch 640 is closed and a fourth switch 650 is open so the second connection to the transmission antenna is connected to the positive terminal of the power supply 610. The controller 142 controls the direction which current flows through the transmission antenna 110 by selectively opening and closing pairs of the switches.

In one embodiment the switches are MOSFETs, though other transistors or switching devices can be used.

The controller controls the switching of the MOSFETs to provide the required output signal on the transmission antenna. The control signals can be altered to narrow the pulses. This is done by a software change in the controller. The narrowing of the pulse reduces the power transmitted by the transmission antenna.

Another method of reducing the power is by reducing the power supply level.

The control signal can be altered to change the transmit frequency to any marker ball frequency or to other non-marker ball frequencies. In one embodiment only one marker ball frequency will be used.

The required signal can be generated by other means like a half-bridge or a linear amplifier circuit.

Figure 7a shows the test signal in an embodiment. Figure 7a shows the pulses 710 of the test signal and also the pulses 720 of the locate mode for comparison. The pulses 710 of the test signal are shown as solid lines and the pulses 720 of the locate mode are shown in broken lines. As shown in Figure 7a, the controller controls the transmission antenna to transmit the test signal as a series of pulses 710 having a narrower pulse width compared to the pulses 720 in the locate mode. The pulses 710 of the test signal have an equal height to the pulses 720 of the locate mode.

Figure 7b shows the test signal in an alternative embodiment. As shown in Figure 7b, the controller controls the transmission antenna to transmit pulses 730 with a lower height than the pulses 720 in the locate mode. This may be achieved by reducing the level of the power supply.

Figure 7c shows the signal received by the reception antennas in for either of the signals shown in Figure 7a and Figure 7b. As shown in Figure 7c, the received power 740 is lower the antenna saturation level 750. This means that the reception antennas are not saturated and the power of the transmitted signals can be determined.

In the embodiment described above, the validation test is carried out on the locator. In an alternative embodiment, parts of the validation test are carried out by a computing device such as a personal computer, tablet or smartphone.

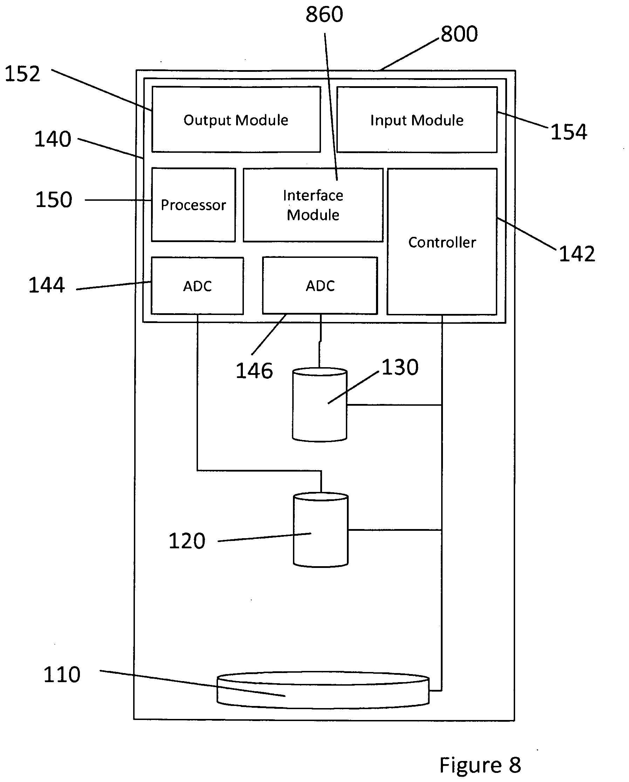

Figure 8 shows a locator according to an embodiment in which the validation test is carried out when the locator is coupled to a computing device. The locator 800 comprises a control and processing module 140, a transmission antenna 110, a first reception antenna 120 and a second reception antenna 130. The transmission antenna 110, the first reception antenna and the second reception antenna are as described above in relation to figures 1 and 2.

The control and processing module 140 comprises a controller 142, a first analogue to digital converter (ADC) 144, a second analogue to digital converter 146, a processor 150, an output module 152, an input module 154, and an interface module 860.

The controller 142, the first ADC 144, the second ADC 146, the output module 152 and the input module 152 are as described above in relation to figure 2. The processor 150 processes signals in the locate mode as described above in relation to figures 3 and 4.

The interface module 860 is a wired or wireless interface which allows the locator 800 to communicate with a computing device. For example the interface module may be a wired interface such as universal serial bus (USB) interface, or a wireless interface such as a bluetooth or wi-fi interface.

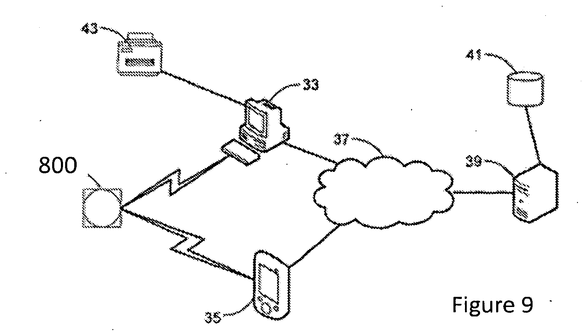

Figure. 9 shows a system for validating the operation of the locator of figure 8. The locator 800 communicates with a personal computer 33, or a smartphone 35 using the interface module 860. In this embodiment the locator 800 communicates over a wireless connection with the personal computer 33 or the smartphone 35, however in other embodiments the connection may be a wired connection.

The personal computer 33 and the smartphone 35 are connected via a network 37 such as the internet to a server 39. The server 39 is coupled to a storage device 41 which stores calibration data for the locator 800. The storage device 41 may store calibration data for a plurality of locators. The calibration data may be searchable using an identifier, for example a serial number, of the locator. A printer 43 is coupled to the personal computer 33.

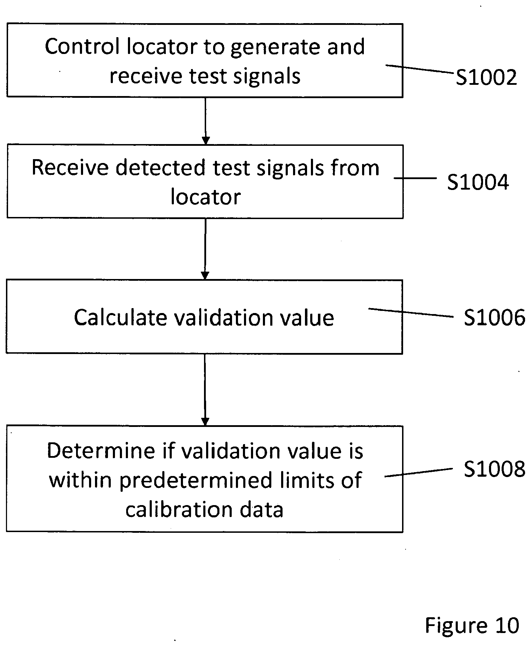

Figure 10 shows a method carried out on a computing device such as the personal computer 33, or the smartphone 35 to validate the operation of the locator 800.

In step S1002, the computing device controls the locator 800 to generate the test signal in the transmission antenna 110 and to receive the test signal in the first reception antenna 120 and the second reception antenna 130. The signals are generated and received as described above in relation to figures 5, 6, 7a, 7b and 7c. The detected test signals are then digitised by the ADCs in the locator 800. The interface unit 860 of the locator 800 then sends the digitised detected test signals to the computing device.

The computing device receives the digitised detected test signals in step S1004.

In step S1006, the computing device calculates a validation value from the digitised detected test signals.

In step S1008, the computing device determines whether the validation value is within predetermined limits of the calibration data.

In an embodiment, the computing device retrieves the calibration data from the storage device 41 coupled to server 39 using an identifier of the locator 800. The computing device may determine the identifier of the locator 800 from data stored on the locator 800.

In an alternative embodiment, the computing device may determine the calibration data from data stored on the locator.

In an embodiment, if the validation data is within the predetermined limits of the calibration data, the personal computer 33 generates a certificate to show that the locator has passed the validation test. The certificate may be printed by the printer 43 coupled to the personal computer 33.

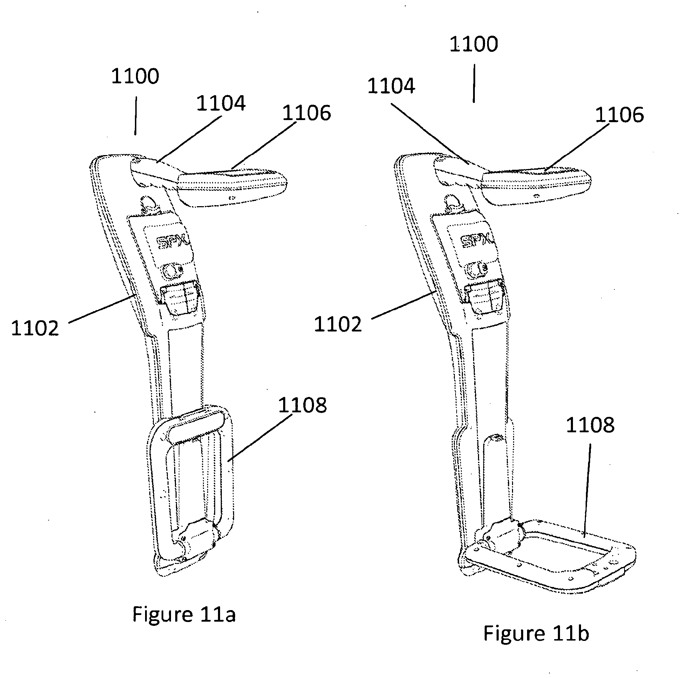

Figures 11a and 11b show a locator 1100 according to an embodiment. The locator 1100 is contained within a housing 1102. The housing 1102 comprises a handle 1104 which is held by a user during use. Adjacent to the handle is a display 1106 which displays indications to a user, for example the results of the validation test. The housing 1102 has a section which extends from the handle towards the ground during use. The transmission antenna 1108 is located at the opposite end of the housing from the handle 1104 and is foldable away from the housing.

Figure 11a shows the transmission antenna 1108 in a folded position and figure 11b shows the transmission antenna 1108 in an unfolded position.

In an embodiment, the validation test described above is carried out in the folded position. It is noted that in the folded position, the transmission antenna will have its axis substantially perpendicular to the axes of the reception antennas which are within the housing, this means that the received power of the test signal will be reduced. As discussed above, this may be advantageous as it avoids saturation of the reception antennas.

In an alternative embodiment, the validation test described above is carried out with the transmission antenna in the unfolded position. In use in the marker locate mode, the transmission antenna is positioned in the unfolded position.

In an embodiment the locator is also operable to locate buried conductors such as cables or pipes by detecting magnetic fields emitted by the buried conductor. The locator may have a dual locate mode in which information on the location of buried electronic markers and information on the location of buried conductors is provided to the user at the same time.

While in Figures 11a and 11b the transmission antenna is shown as being foldable, in an alternative embodiment, the transmission antenna may be fixed in position. Such alternative embodiments could use a transmit coil wound around a core of magnetically permeable material, such as a ferrite rod. The core acts to concentrate the magnetic flux, enabling the coil to be made smaller than an air cored antenna of equivalent capability. Such a transmit coil could be concealed inside the locator.

In addition to the validation of the locator as described above, the operation of the reception antennas may be validated using windings around each of the transmission antennas as described in United Kingdom Patent application 0803873.9.

The digital domain signal processing described above may be implemented in FPGA, DSP or microcontroller devices, or split across some combination of the aforementioned devices.

Aspects of the present invention can be implemented in any convenient form, for example using dedicated hardware, or a mixture of dedicated hardware and software for the processing of the signals. The computing devices and processing apparatuses can comprise any suitably programmed apparatuses such as a general purpose computer, personal digital assistant, mobile telephone (such as a WAP or 3G-compliant phone) and so on. Since the processing of the present invention can be implemented as software, each and every aspect of the present invention thus encompasses computer software implementable on a programmable device. The computer software can be provided to the programmable device using any conventional carrier medium. The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The present invention has been described above purely by way of example. Modifications in detail may be made to the embodiments within the scope of the present invention as defined by the appended claims.

**Claims**

1.    A locator (100) for locating a buried electromagnetic marker, the locator comprising:

a transmission antenna (110) for generating a first oscillatory magnetic field to couple with an electromagnetic marker;
a first reception antenna (120) for receiving an oscillatory magnetic field emitted by the electromagnetic marker; and
a first analogue to digital converter (144), **characterised in that**, the locator is operable in a marker locate mode and a validation mode in which operation of the transmission antenna is validated against calibration data, wherein:

in the marker locate mode:

during a first time period, the transmission antenna is configured to generate the first oscillatory magnetic field and the reception antenna is configured to not output a signal; and
during a second time period, after the first time period, the transmission antenna is configured to stop generating an oscillatory magnetic field and the first reception antenna is configured to receive an oscillatory magnetic field emitted by the electromagnetic marker; and

in the validation mode:

the transmission antenna is configured to generate a test oscillatory magnetic field;
the first reception antenna is configured to directly receive the test oscillatory magnetic field transmitted by the transmission antenna and thereby generate a first detected test signal;
the first analogue to digital converter is configured to generate a first digitised test signal from the first detected test signal, the first digitised test signal being indicative of the test oscillatory magnetic field received by the first reception antenna.

2. A locator according to claim 1, further comprising:

a memory (156) storing calibration data (158); and
a processor (150) configured to calculate a validation value from the first digitised test signal and determine if the validation value is within predetermined limits of the calibration data.

3. A locator according to claim 1, further comprising:

a second reception antenna (130) for receiving an oscillatory magnetic field emitted by the electromagnetic marker in the marker locate mode, the second reception antenna being configured to receive, in the validation mode, the test oscillatory magnetic field and thereby generate a second detected test signal,
the locator further comprising a second analogue to digital converter (146) configured to generate a second digitised test signal from the second detected test signal, the second digitised test signal being indicative of the test oscillatory magnetic field received by the second reception antenna.

4. A locator according to claim 3, further comprising:

a memory (156) storing calibration data (158); and
a processor (150) configured to calculate a validation value from the first digitised test signal and the second digitised test signal and determine if the validation value is within predetermined limits of the calibration data.

5. A locator according to claim 1, wherein the first oscillatory magnetic field comprises a plurality of pulses having a first pulse width, and the test oscillatory magnetic field comprises a plurality of pulses having a second pulse width, the second pulse width being shorter than the first pulse width.

6. A locator according to claim 1, wherein the first oscillatory magnetic field comprises a plurality of pulses having a first amplitude, and the test oscillatory magnetic field comprises a plurality of pulses having a second amplitude, the second amplitude being smaller than the first amplitude.

7. A locator according to claim 1, further comprising an interface configured to transfer the first digitised test signal to a coupled computing device.

8. A method of validating the operation of a locator for locating a buried electromagnetic marker according to any one of the preceding claims, the method comprising:

in the marker locate mode:

during a first time period, controlling the transmission antenna to generate the first oscillatory magnetic field and controlling the reception antenna to not output a signal; and
during a second time period, after the first time period, the transmission antenna is configured to stop generating an oscillatory magnetic field and the first reception antenna is configured to receive an oscillatory magnetic field emitted by the electromagnetic marker; and

in the validation mode:

controlling the transmission antenna to generate a test oscillatory magnetic field;
controlling the reception antenna to directly receive the test oscillatory magnetic field and thereby generate a first detected test signal;
calculating a validation value from the first detected test signal; and
determining if the validation value is within predetermined limits of calibration data.

9. A method according to claim 8, further comprising generating a certificate if the validation value is within the predetermined limits of the calibration data.

10. A method according to claim 8, further comprising determining an identifier of locator and retrieving the calibration data from a remote database using the identifier of the locator.

11. A method according to claim 8, wherein the transmission antenna of the locator is configured to generate a first oscillatory magnetic field to couple with an electromagnetic marker and the test oscillatory magnetic field comprises a plurality of pulses having a second pulse width, the second pulse width being shorter than a first pulse width.

12. A method according to claim 8, wherein the transmission antenna of the locator is configured to generate a first oscillatory magnetic field to couple with an electromagnetic marker and the test oscillatory magnetic field comprises a plurality of pulses having a second amplitude, the second amplitude being smaller than the first amplitude.

13. A method according to claim 8, further comprising disabling the locator if the validation value is not within the predetermined limits of the calibration data.

14. A computer readable carrier medium having stored thereon computer readable instructions to cause the locator of claim 1 to execute the steps of the method of claim 8.

**Patentansprüche**

1. Ortungsgerät (100) zur Ortung eines vergrabenen elektromagnetischen Markierers, wobei das Ortungsgerät umfasst:

eine Sendeantenne (110) zum Erzeugen eines ersten oszillierenden Magnetfelds zum Koppeln mit einem elektromagnetischen Markierer;
eine erste Empfangsantenne (120) zum Empfangen eines oszillierenden Magnetfeldes, das von dem elektromagnetischen Markierer emittiert wird; und
einen ersten Analog-Digital-Umwandler (144), **dadurch gekennzeichnet, dass** das Ortungsgerät in einem Markierer-Ortungsmodus und einem Validierungsmodus betrieben werden kann, in dem der Betrieb der Sendeantenne anhand von Kalibrierdaten validiert wird, wobei:
im Markierer-Ortungsmodus:

die Sendeantenne während einer ersten Zeitperiode so konfiguriert ist, dass sie das erste oszillierende Magnetfeld erzeugt, und die Empfangsantenne so konfiguriert ist, dass sie kein Signal ausgibt; und
die Sendeantenne während einer zweiten Zeitperiode nach der ersten Zeitperiode so konfiguriert ist, dass sie aufhört, ein oszillierendes Magnetfeld zu erzeugen, und die erste Empfangsantenne so konfiguriert ist, dass sie ein oszillierendes Magnetfeld empfängt, das von dem elektromagnetischen Markierer emittiert wird; und
im Validierungsmodus:

die Sendeantenne so konfiguriert ist, dass sie ein oszillierendes Testmagnetfeld erzeugt;
die erste Empfangsantenne so konfiguriert ist, dass sie das von der Sendeantenne gesendete Testoszillationsmagnetfeld direkt empfängt und dadurch ein erstes erfasstes Testsignal erzeugt;
der erste Analog-Digital-Umwandler so konfiguriert ist, dass er ein erstes digitalisiertes Testsignal aus dem ersten erfassten Testsignal erzeugt, wobei das erste digitalisierte Testsignal das von der ersten Empfangsantenne empfangene oszillierende Testmagnetfeld anzeigt.

2. Ortungsgerät nach Anspruch 1, ferner umfassend:

einen Speicher (156), der Kalibrierdaten (158) speichert; und
einen Prozessor (150), der so konfiguriert ist, dass er einen Validierungswert aus dem ersten digitalisierten Testsignal berechnet und feststellt, ob der Validierungswert innerhalb vorgegebener Grenzen der Kalibrierdaten liegt.

3. Ortungsgerät nach Anspruch 1, ferner umfassend: eine zweite Empfangsantenne (130) zum Empfangen eines oszillierenden Magnetfeldes, das von dem elektromagnetischen Markierer in dem Markierer-Ortungsmodus emittiert wird, wobei die zweite Empfangsantenne so konfiguriert ist, dass sie im Validierungsmodus das oszillierende Testmagnetfeld empfängt und dadurch ein zweites erfasstes Testsignal erzeugt, wobei das Ortungsgerät ferner einen zweiten Analog-Digital-Umwandler (146) umfasst, der so konfiguriert ist, dass er ein zweites digitalisiertes Testsignal aus dem zweiten erfassten Testsignal erzeugt, wobei das zweite digitalisierte Testsignal, das von der zweiten Empfangsantenne empfangene oszillierende Testmagnetfeld anzeigt.

4. Ortungsgerät nach Anspruch 3, ferner umfassend:

    einen Speicher (156), der Kalibrierdaten (158) speichert; und
    einen Prozessor (150), der so konfiguriert ist, dass er einen Validierungswert aus dem ersten digitalisierten Testsignal und dem zweiten digitalisierten Testsignal berechnet und bestimmt, ob der Validierungswert innerhalb vorgegebener Grenzen der Kalibrierdaten liegt.

5. Ortungsgerät nach Anspruch 1, wobei das erste oszillierende Magnetfeld eine Vielzahl von Impulsen einer ersten Impulsbreite umfasst, und das oszillierende Testmagnetfeld eine Vielzahl von Impulsen einer zweiten Impulsbreite umfasst, wobei die zweite Impulsbreite kürzer als die erste Impulsbreite ist.

6. Ortungsgerät nach Anspruch 1, wobei das erste oszillierende Magnetfeld eine Vielzahl von Impulsen einer ersten Amplitude umfasst, und das oszillierende Testmagnetfeld eine Vielzahl von Impulsen einer zweiten Amplitude umfasst, wobei die zweite Amplitude kleiner als die erste Amplitude ist.

7. Ortungsgerät nach Anspruch 1, das ferner eine Schnittstelle umfasst, die so konfiguriert ist, dass sie das erste digitalisierte Testsignal an eine gekoppelte Rechenvorrichtung überträgt.

8. Verfahren zum Validieren des Betriebs eines Ortungsgerät zur Verortung eines vergrabenen elektromagnetischen Markierers nach einem der vorhergehenden Ansprüche, wobei das Verfahren umfasst:

    im Markierer-Ortungsmodus:

        während einer ersten Zeitperiode, Steuern der Sendeantenne so, dass sie das erste oszillierende Magnetfeld erzeugt und Steuern der Empfangsantenne so, dass sie kein Signal aussendet; und
        die Sendeantenne während einer zweiten Zeitperiode nach der ersten Zeitperiode so konfiguriert ist, dass sie aufhört, ein oszillierendes Magnetfeld zu erzeugen, und die erste Empfangsantenne so konfiguriert ist, dass sie ein oszillierendes Magnetfeld empfängt, das von dem elektromagnetischen Markierer emittiert wird; und
    im Validierungsmodus:

        Steuern der Sendeantenne so, dass sie ein oszillierendes Testmagnetfeld erzeugt;
        Steuern der Empfangsantenne so, dass sie das oszillierende Testmagnetfeld direkt empfängt und dadurch ein erstes erfasstes Testsignal erzeugt;
        Berechnen eines Validierungswertes aus dem ersten erfassten Testsignal; und
        Bestimmen, ob der Validierungswert innerhalb vorbestimmter Grenzen der Kalibrierdaten liegt.

9. Verfahren nach Anspruch 8, ferner umfassend das Erzeugen eines Zertifikats, wenn der Validierungswert innerhalb der vorgegebenen Grenzen der Kalibrierdaten liegt.

10. Verfahren nach Anspruch 8, ferner umfassend das Bestimmen eines Identifikators des Ortungsgerätes und das Abrufen der Kalibrierdaten aus einer entfernten Datenbank unter Verwendung des Identifikators des Ortungsgerätes.

11. Verfahren nach Anspruch 8, wobei die Sendeantenne des Ortungsgerätes so konfiguriert ist, dass sie ein erstes oszillierendes Magnetfeld erzeugt, um mit einem elektromagnetischen Markierer zu koppeln, und das oszillierende Testmagnetfeld eine Vielzahl von Impulsen einer zweiten Impulsbreite umfasst, wobei die zweite Impulsbreite kürzer als eine erste Impulsbreite ist.

12. Verfahren nach Anspruch 8, wobei die Sendeantenne des Ortungsgerätes so konfiguriert ist, dass sie ein erstes oszillierendes Magnetfeld erzeugt, um mit einem elektromagnetischen Markierer zu koppeln, und das oszillierende Testmagnetfeld eine Vielzahl von Impulsen einer zweiten Amplitude umfasst, wobei die zweite Amplitude kleiner als die erste Amplitude ist.

13. Verfahren nach Anspruch 8, das ferner das Abschalten des Ortungsgerätes umfasst, wenn der Validierungswert nicht innerhalb der vorgegebenen Grenzen der Kalibrierdaten liegt.

14. Computerlesbares Trägermedium mit darauf gespeicherten computerlesbaren Anweisungen, um das Ortungsgerät nach Anspruch 1 zu veranlassen, die Schritte des Verfahrens nach Anspruch 8 auszuführen.

## Revendications

1. Détecteur (100) qui permet de détecter une balise électromagnétique enfouie, le détecteur comprenant :

    une antenne d'émission (110) destinée à générer un premier champ magnétique oscillant à coupler à une balise électromagnétique ;
    une première antenne de réception (120) destinée à recevoir un champ magnétique oscillant émis par la balise électromagnétique ; et
    un premier convertisseur analogique-numérique (144), **caractérisé en ce que** le détecteur peut fonctionner dans un mode de détection de balise et un mode de confirmation dans lequel le fonctionnement de l'antenne d'émission est confirmé par rapport à des données d'étalonnage, dans lequel :

    en mode de détection de balise :

        pendant une première période de temps, l'antenne d'émission est conçue pour générer le premier champ magnétique oscillant et l'antenne de réception est conçue pour ne pas émettre de signal ; et
        pendant une seconde période de temps, après la première période de temps, l'antenne d'émission est conçue pour arrêter de générer un champ magnétique oscillant et la première antenne de réception est conçue pour recevoir un champ magnétique oscillant émis par la balise électromagnétique ; et

    en mode de confirmation :

        l'antenne d'émission est conçue pour générer un champ magnétique oscillant d'essai ;
        la première antenne de réception est conçue pour recevoir directement le champ magnétique oscillant d'essai émis par l'antenne d'émission et ainsi générer un premier signal d'essai détecté ;
        le premier convertisseur analogique-numérique est conçu pour générer un premier signal d'essai numérisé à partir du premier signal d'essai détecté, le premier signal d'essai numérisé étant indicatif du champ magnétique oscillant d'essai reçu par la première antenne de réception.

2. Détecteur selon la revendication 1, comprenant en outre :

    une mémoire (156) stockant des données d'étalonnage (158) ; et
    un processeur (150) conçu pour calculer une valeur de confirmation à partir du premier signal d'essai numérisé et déterminer si la valeur de confirmation est dans des limites prédéterminées des données d'étalonnage.

3. Détecteur selon la revendication 1, comprenant en outre :
une seconde antenne de réception (130) destinée à recevoir un champ magnétique oscillant émis par la balise électromagnétique dans le mode de détection de balise, la seconde antenne de réception étant conçue pour recevoir, dans le mode de confirmation, le champ magnétique oscillant d'essai et générer ainsi un second signal d'essai détecté, le détecteur comprenant en outre un second convertisseur analogique-numérique (146) conçu pour générer un second signal d'essai numérisé à partir du second signal d'essai détecté, le second signal d'essai numérisé étant indicatif du champ magnétique oscillant d'essai reçu par la seconde antenne de réception.

4. Détecteur selon la revendication 3, comprenant en outre :

    une mémoire (156) stockant des données d'étalonnage (158) ; et
    un processeur (150) conçu pour calculer une valeur de confirmation à partir du premier signal d'essai numérisé et du second signal d'essai numérisé et déterminer si la valeur de confirmation est dans des limites prédéterminées des données d'étalonnage.

5. Détecteur selon la revendication 1, dans lequel le premier champ magnétique oscillant comprend une pluralité d'impulsions ayant une première largeur d'impulsion, et le champ magnétique oscillant d'essai comprend une pluralité d'impulsions ayant une seconde largeur d'impulsion, la seconde largeur d'impulsion étant plus courte que la première largeur d'impulsion.

6. Détecteur selon la revendication 1, dans lequel le premier champ magnétique oscillant comprend une pluralité d'impulsions ayant une première amplitude, et le champ magnétique oscillant d'essai comprend une pluralité d'impulsions ayant une seconde amplitude, la seconde amplitude étant inférieure à la première amplitude.

7. Détecteur selon la revendication 1, comprenant en outre une interface conçue pour transférer le premier signal d'essai numérisé vers un dispositif informatique couplé.

8. Procédé de confirmation du fonctionnement d'un détecteur qui permet de détecter une balise électromagnétique enfouie selon l'une quelconque des revendications précédentes, le procédé comprenant :

en mode de détection de balise :

pendant une première période de temps, la commande de l'antenne d'émission pour générer le premier champ magnétique oscillant et la commande de l'antenne de réception pour ne pas émettre de signal ; et pendant une seconde période de temps, après la première période de temps, l'antenne d'émission est conçue pour arrêter de générer un champ magnétique oscillant et la première antenne de réception est conçue pour recevoir un champ magnétique oscillant émis par la balise électromagnétique ; et

en mode de confirmation :

la commande de l'antenne d'émission pour générer un champ magnétique oscillant d'essai ;
la commande de l'antenne de réception pour recevoir directement le champ magnétique oscillant d'essai et générer ainsi un premier signal d'essai détecté ;
le calcul d'une valeur de confirmation à partir du premier signal d'essai détecté ; et
la détermination du fait que la valeur de confirmation est dans des limites prédéterminées des données d'étalonnage ou non.

9. Procédé selon la revendication 8, comprenant en outre la génération d'un certificat si la valeur de confirmation est dans les limites prédéterminées des données d'étalonnage.

10. Procédé selon la revendication 8, comprenant en outre la détermination d'un identifiant de détecteur et la récupération des données d'étalonnage à partir d'une base de données distante en utilisant l'identifiant du détecteur.

11. Procédé selon la revendication 8, dans lequel l'antenne d'émission du détecteur est conçue pour générer un premier champ magnétique oscillant à coupler à une balise électromagnétique et le champ magnétique oscillant d'essai comprend une pluralité d'impulsions ayant une seconde largeur d'impulsion, la seconde largeur d'impulsion étant plus courte qu'une première largeur d'impulsion.

12. Procédé selon la revendication 8, dans lequel l'antenne d'émission du détecteur est conçue pour générer un premier champ magnétique oscillant à coupler à une balise électromagnétique et le champ magnétique oscillant d'essai comprend une pluralité d'impulsions ayant une seconde amplitude, la seconde amplitude étant inférieure à la première amplitude.

13. Procédé selon la revendication 8, comprenant en outre la désactivation du détecteur si la valeur de confirmation n'est pas dans les limites prédéterminées des données d'étalonnage.

14. Support lisible par ordinateur sur lequel sont stockées des instructions lisibles par ordinateur pour amener le détecteur selon la revendication 1 à exécuter les étapes du procédé selon la revendication 8.

Figure 1

Figure 2

Receive user input indicating type of markers ⸺ S302

Transmit pulses ⸺ S304

Stop transmitting pulses ⸺ S306

Detect magnetic field from marker ⸺ S308

Convert detected signals to digital signals ⸺ S310

Figure 3    Calculate depth using digital signals ⸺ S312

Output indication of calculated depth ⸺ S314

transmitted
signal

a)

412

Transmit
22 pulses
at marker
frequency

414

Transmit
22 pulses
at marker
frequency

time

received
signal

b)

settling time

422

424

Receive
antenna
signals.

Sample at
1Msps

426

Receive
antenna
signals.

Sample at
1Msps

time

antenna
enable
signal

c)

432

Antenna
blanking
interval

434

Enable antenna
signal channels

436

Antenna
blanking
interval

438

Enable antenna
signal channels

time

Figure 4

```
┌─────────────────────────────────┐
│  Receive input initiating validation │  ──── S502
│             procedure            │
└─────────────────────────────────┘
                 │
                 ▼
┌─────────────────────────────────┐
│        Generate test signal      │  ──── S504
│                                  │
└─────────────────────────────────┘
                 │
                 ▼
┌─────────────────────────────────┐
│         Receive test signal      │  ──── S506
│                                  │
└─────────────────────────────────┘
                 │
                 ▼
┌─────────────────────────────────┐
│      Calculate validation value  │  ──── S508
│                                  │
└─────────────────────────────────┘
                 │
                 ▼
┌─────────────────────────────────┐
│   Determine if validation value is │  ──── S510
│   within predetermined limits of │
│          calibration data        │
└─────────────────────────────────┘
```

Figure 5

Figure 6

710 720
720
720 710
710
710
720
710
720
720
710 720

transmitted
signal

time

Figure 7a

720 720

transmitted
signal

time

730 730 Figure 7b

received
signal

740 750

antenna saturation level

time

Figure 7c

Figure 8

Figure 9

```
┌─────────────────────────────────┐
│   Control locator to generate and │ ──── S1002
│      receive test signals         │
└─────────────────────────────────┘
                 │
                 ▼
┌─────────────────────────────────┐
│  Receive detected test signals from │ ──── S1004
│             locator               │
└─────────────────────────────────┘
                 │
                 ▼
┌─────────────────────────────────┐
│     Calculate validation value    │ ──── S1006
└─────────────────────────────────┘
                 │
                 ▼
┌─────────────────────────────────┐
│   Determine if validation value is │ ──── S1008
│  within predetermined limits of   │
│         calibration data          │
└─────────────────────────────────┘
```

Figure 10

1100

1104

1106

1102

1108

Figure 11a

1100

1104

1106

1102

1108

Figure 11b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7336078 B1
- GB 1308550 A
- US 6617856 B
- GB 0803873 A